# EUROPEAN PATENT APPLICATION

(11) **EP 2 416 543 A1**
(43) Date of publication of application: **08.02.2012**
(21) Application number: 10758661.2
(22) Date of filing: 29.03.2010
(51) Int. Cl.: H04M 1/00, H04M 11/04, H04W 4/22, H04W 48/04

(54) **COMMUNICATION METHOD AND MOBILE STATION**

(30) Priority: 01.04.2009 JP 2009089513
(71) Applicant: NTT DOCOMO, INC., Chiyoda-ku Tokyo 100-6150 (JP)
(72) Inventor: YAMAGISHI, Hiroaki c/o NTT DOCOMO, Inc., Int.Prop.Dept., Tokyo 100-6150 (JP); KANAUCHI, Masashi c/o NTT DOCOMO, Inc., Int.Prop.Dept., Tokyo 100-6150 (JP)
(74) Representative: HOFFMANN EITLE
(86) International application number: PCT/JP2010/055597
(87) International publication number: WO 2010/113890

(57) **Abstract**

A communication method in a mobile station includes the steps of placing the mobile station in a self mode; and allowing the mobile station to receive a radio wave during the self mode. The communication method may further includes the steps of receiving broadcast information during the self mode; accepting a request for originating a call during the self mode; determining whether the call is an emergency call; and originating the call, when the call is an emergency call.

## Description

### TECHNICAL FIELD

The present invention relates to a communication method and a mobile station.

### BACKGROUND ART

A mobile station can be placed in a self mode, during which originating and receiving calls is restricted by disabling (turning off) a radio. The self mode is used as a consideration for medical devices and precision instruments or as a courtesy in hospitals, trains, airplanes, and so on.

During the self mode, reading received mails, modifying the configuration of the mobile station, gaming, and so on are typically allowed. However, communication by the mobile station over the network is not allowed, except for an emergency call to a police station, a fire department, or the like (see Japanese Patent Laid-Open Publication No. 2003-224878, for example).

### DISCLOSURE OF INVENTION

### [PROBLEM(S) TO BE SOLVED BY THE INVENTION]

When a mobile station disables the radio during the self mode, in order to originate an emergency call, the mobile station needs to prepare for originating the emergency call according to a predetermined procedure. Specifically, the mobile station needs to enable (turn on) the radio, perform a carrier search, capture a cell after detecting the carrier, obtain broadcast information for the cell, and verify that the mobile station can originate an emergency call. Then, the mobile station originates the emergency call. For this reason, it takes time for a mobile station to originate an emergency call during the self mode.

In addition, when a mobile station disables the radio during the self mode, the mobile station cannot receive an emergency message such as ETWS (Earthquake and Tsunami Warning System) or CBS (cell broadcast service). Furthermore, the mobile station can neither receive a message for modifying broadcast information nor receive an incoming call requiring emergency attention.

In order to solve the problem related to the self mode, it is a general object of the present invention to allow a mobile station to receive an emergency incoming call such as ETWS during the self mode.

### [MEANS FOR SOLVING THE PROBLEM(S)]

In one aspect of the present invention, there is provided a communication method in a mobile station, including the steps of:
placing the mobile station in a self mode; and
allowing the mobile station to receive a radio wave during the self mode.

In another aspect of the present invention, there is provided a mobile station, comprising:
a mode setting unit configured to place the mobile station in a self mode; and
a control unit configured to allow the mobile station to receive a radio wave during the self mode.

### [ADVANTAGEOUS EFFECT OF THE INVENTION]

According to an embodiment of the present invention, a mobile station can receive an emergency incoming call such as ETWS during the self mode.

### BRIEF DESCRIPTION OF THE DRAWINGS

Fig. 1 shows a block diagram of a mobile station in accordance with an embodiment of the present invention.
Fig. 2 shows a sequence diagram of a procedure of placing a mobile station in the self mode in accordance with an embodiment of the present invention.
Fig. 3 shows a sequence diagram of a procedure of originating an emergency call and receiving an emergency incoming call in a mobile station in accordance with an embodiment of the present invention.
Fig. 4 shows an example of a paging message used in an embodiment of the present invention (in the case of LTE).

### DETAILED DESCRIPTION OF THE PREFERRED EMBODIMENTS

A self mode is used as a consideration for medical devices and precision instruments, as a courtesy in a public space, or the like. During the self mode, originating and receiving a call by a mobile station is restricted, and accordingly a radio wave is not transmitted from the mobile station. During the self mode, the radio (i.e., a receiver and a transmitter) in the mobile station is typically disabled. When the radio is disabled, in order to originate an emergency call to a police station, a fire department, or the like, the mobile station needs to enable the radio, perform a carrier search, capture a cell after detecting the carrier, obtain broadcast information for the cell, and verify that the mobile station can originate an emergency call. In addition, when the radio is disabled, the mobile station cannot receive an emergency incoming call. For example, the mobile station cannot receive an emergency message such as ETWS or CBS. Furthermore, the mobile station cannot receive an incoming call requiring emergency attention from a police station, a fire department, or the like.

According to an embodiment of the present invention, during the self mode, the transmitter in the mobile station is disabled and the receiver in the mobile station is enabled. Specifically, the mobile station is allowed to receive a radio wave during the self mode. Instead of disabling the transmitter in the mobile station during the self mode, a user interface associated with originating a call (except for an emergency call) may be deactivated during the self mode. By allowing the mobile station to receive a radio wave during the self mode, the mobile station can perform a carrier search or a cell reselection during the self mode and obtain broadcast information for the cell. Accordingly, the mobile station can shorten the time to originate an emergency call during the self mode. In addition, by enabling the receiver in the mobile station during the self mode, the mobile station can receive an emergency incoming call. As used herein, an emergency call is a call specified for use in an emergency. For example, an emergency call can be determined based on a telephone number which is registered in advance in the mobile station. As used herein, an emergency incoming call is an incoming call specified for use in an emergency.

For example, the emergency incoming call can be determined based on whether a predetermined information element in a paging message indicates an emergency. An emergency incoming call includes an emergency message such as ETWS or CBS and an incoming call requiring emergency attention from a police station, a fire department, or the like.

### <Block diagram of a mobile station>

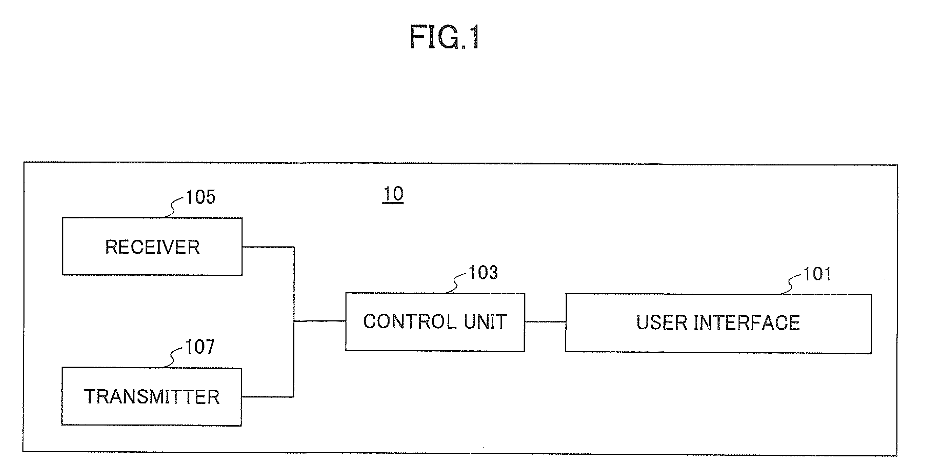

Fig. 1 shows a block diagram of a mobile station 10 in accordance with an embodiment of the present invention. The mobile station 10 includes a user interface 101, a control unit 103, a receiver 105, and a transmitter 107.

The user interface 101 accepts a setting request for establishing the self mode from a user to place the mobile station 10 in the self mode. The user interface 101 also accepts a release request for releasing the self mode from the user to release the self mode in the mobile station 10. In addition, the user interface 101 accepts a request for originating a call from the user. As described below, a request for originating a call except for an emergency call is rejected during the self mode.

The control unit 103 controls processing in the radio (the transmitter 107 and the receiver 105) in the mobile station and controls processing in the user interface 101. The control unit 103 rejects transmission of radio waves (except for an emergency call) from the transmitter 107 and allows reception of a radio wave by the receiver 105 according to the setting request for establishing the self mode accepted by the user interface 101. The control unit 103 also allows transmission of a radio wave from the transmitter 107 according to the release request for releasing the self mode accepted by the user interface 101. For example, the control unit 103 may retain the setting status of the self mode as an ON state according to the setting request for establishing the self mode and deactivate the user interface associated with originating a call (except for an emergency call). At this moment, the control unit 103 may disable the transmitter 107. The control unit 103 may also retain the setting status of the self mode as an OFF state according to the release request for releasing the self mode and activate the user interface associated with originating a call. At this moment, the control unit 103 may enable the transmitter 107.

During the self mode, the control unit 103 rejects transmission of a radio wave (except for an emergency call) from the transmitter 107. When the user interface 101 accepts a request for originating an emergency call during the self mode, the control unit 103 allows transmission of the emergency call. For example, whether the requested call is an emergency call may be determined based on whether the telephone number of the requested call matches one of emergency telephone numbers which are registered in advance in the mobile station 10.

During the self mode, the control unit 103 also allows reception of a radio wave by the receiver 105. Accordingly, even during the self mode, the receiver 105 can receive information necessary for a carrier search or a cell reselection and the control unit 103 can perform the carrier search or the cell reselection. In addition, even during the self mode, the receiver 105 can receive a paging message and the control unit 103 can determine from the paging message whether the paging message is for an emergency incoming call. During the self mode, the control unit 103 rejects an incoming call (except for an emergency incoming call) without responding to the incoming call. When the receiver 105 receives an emergency incoming call during the self mode, the control unit 103 accepts the emergency incoming call and responds to the incoming call. For example, whether the incoming call is an emergency incoming call may be determined based on whether a predetermined information element in the paging message indicates an emergency. As described above, the emergency incoming call includes an emergency message such as ETWS or CBS and an incoming call requiring emergency attention from a police station, a fire department, or the like. In addition, the control unit 103 may allows reception of a broadcast service such as CBS (cell broadcast service) or MBMS (multimedia broadcast and multicast service) during the self mode.

When the location registration area is changed due to movements of the mobile station 10 during the self mode, or when a location registration needs to be performed at a predetermined time interval, the control unit 103 defers the location registration, so that transmission of a radio wave associated with the location registration can be rejected. When the self mode is released, the control unit 103 performs the deferred location registration.

In addition, the control unit 103 may lengthen a DRX (discontinuous reception) period during the self mode. For example, upon accepting the setting request for establishing the self mode, the control unit 103 may request, via the transmitter 107, a longer DRX period over the network (for example, to the base station). The controller 103 receives a paging message during the self mode according to a DRX period provided from the network in response to the request.

The receiver 105 receives information provided from the network. Since the receiver 105 is enabled during the self mode, the receiver 105 can receive information necessary for a carrier search or a cell reselection, broadcast information, and a paging message. For example, the receiver 105 may receive an emergency paging message. For example, the receiver 105 may receive a paging message for modifying broadcast information, and then receive the broadcast information again. For example, when the mobile station 10 periodically verifies whether broadcast information is modified, the receiver 105 may periodically determine whether broadcast information is modified.

The transmitter 107 transmits information (data, voice, control information, etc.) from the mobile station over the network. For example, when the transmitter 107 is disabled during the self mode but the control unit 103 determines that an emergency call is to be originated, the transmitter 107 is enabled to originate the emergency call over the network. As described above, since the receiver 105 can receive information necessary for a carrier search or a cell reselection and broadcast information even during the self mode, the transmitter 107 can promptly originate the emergency call.

### <Procedure of placing the mobile station in the self mode>

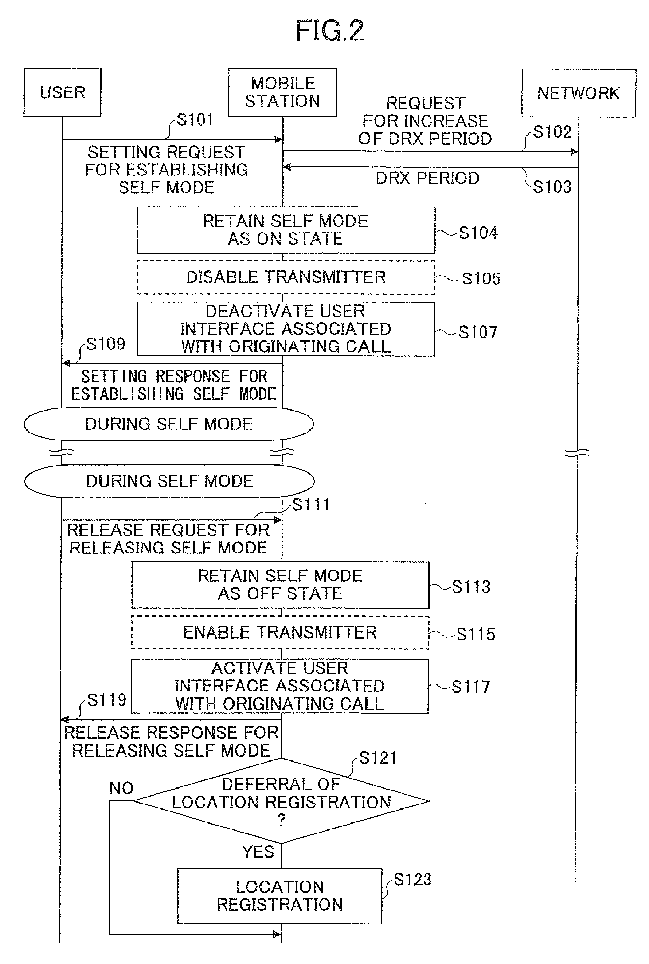

Fig. 2 shows a sequence diagram of a procedure of placing the mobile station 10 in the self mode. While the sequence diagram shown in Fig. 2 is described using the components in the mobile station 10 shown in Fig. 1, each step of the procedure of placing the mobile station in the self mode may be performed by other components. In addition, the sequence diagram shown in Fig. 2 may be performed in different order.

When the user inputs a setting request for setting the self mode via the user interface 101 (S101), the control unit 103 in the mobile station 10 retains the setting status of the self mode as the ON state (S104). At this moment, the control unit 103 may disable the transmitter 107 (S105). In addition, the control unit 103 deactivates the user interface associated with originating a call (except for an emergency call) (S107). The control unit 103 provides a setting response for establishing the self mode via the user interface 101 to the user, indicating that establishment of the self mode has been completed (S109). According to these steps, the mobile station 10 is placed in the self mode. Upon accepting the setting request for establishing the self mode (S101), the control unit 103 may request a longer DRX period over the network (for example, to the base station) before disabling the transmitter 107 (S102). In response to this request, the control unit 103 receives a DRX period over the network and sets the DRX period (S103).

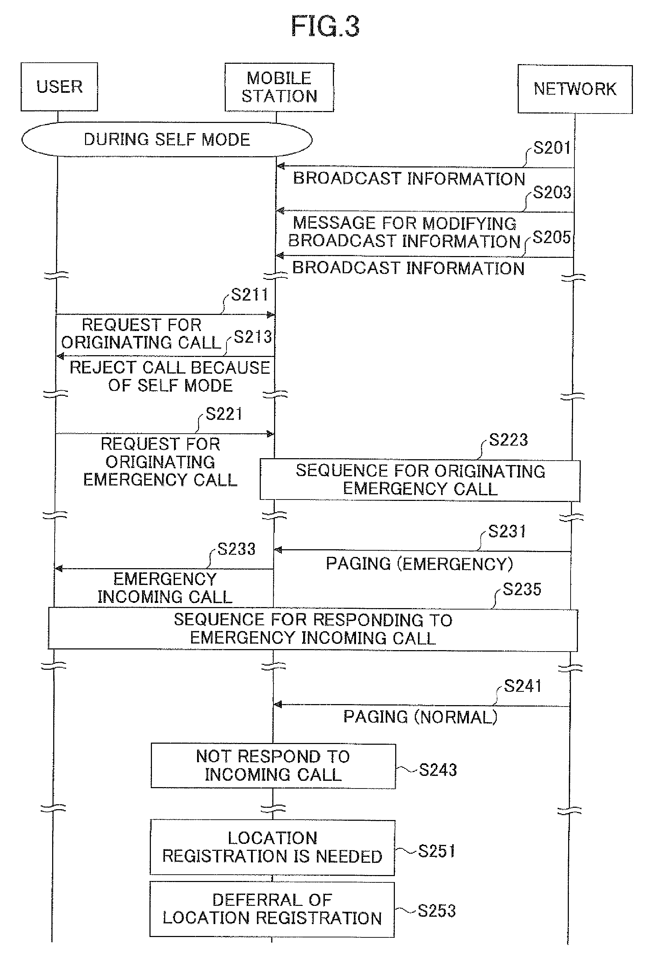

The procedure in the mobile station 10 during the self mode will be described below with reference to Fig. 3.

When the user inputs a release request for releasing the self mode via the user interface 101 (S111), the control unit 103 in the mobile station 10 retains the setting status of the self mode as the OFF state (S113). When the transmitter 107 is disabled during the self mode, the control unit 103 enables the transmitter 107 (S115). In addition, the control unit 103 activates the user interface associated with originating a call (S117). The control unit 103 provides a release response for releasing the self mode via the user interface 101 to the user, indicating that release of the self mode has been completed (S119). According to these steps, the self mode is released and the mobile station 10 is placed in the normal operating mode.

When a location registration is deferred during the self mode (S121), the control unit 103 performs the deferred location registration (S123).

### <Procedure of originating an emergency call and receiving an emergency incoming call in the mobile station>

Fig. 3 shows a procedure of originating an emergency call and receiving an emergency incoming call in the mobile station 10. While the sequence diagram shown in Fig. 3 is described using the components in the mobile station 10 shown in Fig. 1, each step of the procedure may be performed by other components. In addition, the sequence diagram shown in Fig. 3 may be performed in different order.

First, the mobile station 10 is placed in the self mode according to the procedure shown in Fig. 2. During the self mode, the mobile station 10 receives broadcast information by the receiver 105 (S201). In addition, the mobile station 10 may receive may receive a message for modifying broadcast information by the receiver 105 (S203), and then receive the broadcast information again (S205). During the self mode, the mobile station 10 may perform a carrier search or a cell reselection by detecting a predetermined signal sequence. It should be noted that the carrier search or the cell reselection is performed as needed outside the communication area or when the reception level is low, and that reception or second reception of the broadcast information is performed as needed after the carrier search or the cell reselection or at a predetermined time interval. During the self mode, the mobile station 10 may also receive a broadcast service such as CBS or MBMS.

During the self mode, when the user inputs a request for originating a call via the user interface 101 (S211), the control unit determines whether the requested call is an emergency call. For example, whether the requested call is an emergency call may be determined based on whether the telephone number of the requested call matches one of emergency telephone numbers which are registered in advance in the mobile station 10. When the requested call is not an emergency call, the control unit 103 rejects transmission of the call because of being in the self mode (S213).

During the self mode, when the user inputs a request for originating an emergency call via the user interface 101 (S221), the control unit determines whether the requested call is an emergency call. When the requested call is an emergency call, the control unit 103 allows transmission of the emergency call regardless of the self mode (S223).

During the self mode, when the mobile station 10 receives a paging message for an incoming call (S231), the control unit 103 determines whether the incoming call is an emergency incoming call. When the incoming call is an emergency incoming call, the control unit 103 accepts the emergency incoming call (S233). For example, whether the incoming call is an emergency incoming call may be determined based on whether a predetermined information element in the paging message indicates an emergency. The control unit 103 responds to the emergency incoming call and processes the paging message received by the receiver 105 (S235). For example the control unit 105 may display information about the emergency message on the user interface 101 or may initiate a ring tone in response to the incoming call requiring emergency attention.

During the self mode, when the mobile station 10 receives a paging message for an incoming call (S241), the control unit.103 determines whether the incoming call is an emergency incoming call. When the incoming call is not an emergency incoming call, that is, when the incoming call is a normal incoming call, the control unit 103 rejects the incoming call without responding to the incoming call (S243).

When the location registration area is changed due to movements of the mobile station 10 during the self mode, or when a location registration needs to be performed at a predetermined time interval (S251), the control unit 103 defers the location registration (S253).

### <Example of a paging message>

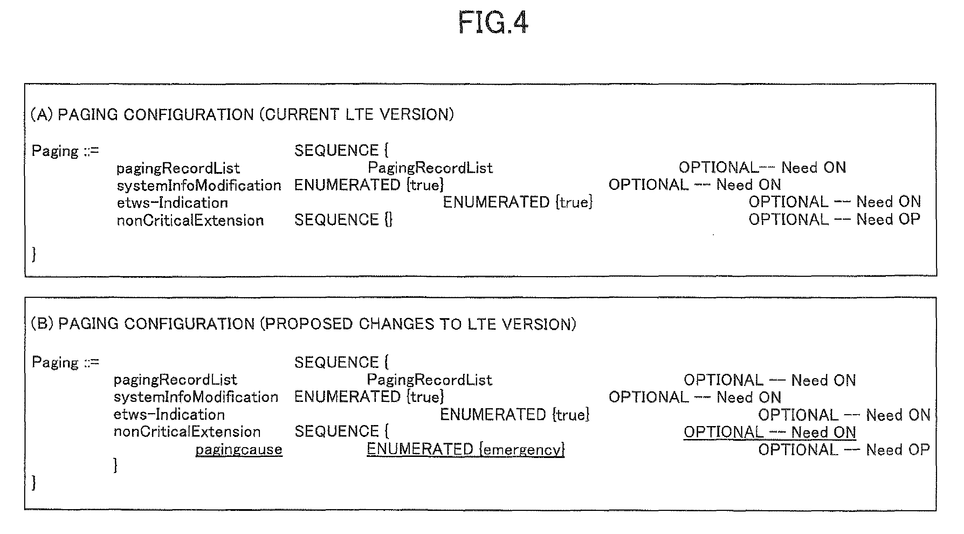

Fig. 4 shows an example of a paging message used in an embodiment of the present invention. As described above, during the self mode, the mobile station 10 receives a paging message and determines whether the paging message is for an emergency incoming call. For this reason, an information element indicating an emergency is included in the paging message.

In an LTE (Long Term Evolution) system, the configuration of a paging message shown in Fig. 4(A) is defined in TS 36.331 v840. The descriptions of information elements in the paging message are shown in Table 1.

**<TABLE 1> Descriptions of information elements in paging message for LTE system**

| Information element | Description |
|---|---|
| pagingRecordList | Plural IDs for identifying destinations of incoming calls are included. |
| systemInfoModification | This information element indicates whether broadcast information is modified. |
| Etws-Indication | This information element is set when ETWS is provided. |
| nonCriticalExtension | This information element is an extensible information element to maintain backward compatibility. When a new information element is added in the future, the new information element is added below this information element. |
| pagingcause | This information element is added to indicate whether the paging message is for an emergency incoming call. In the case of an emergency incoming call, this information element is set to an emergency. |

For example, as shown in Fig. 4(B), in order to set an information element indicating whether the paging message is for an emergency, an information element called "paging cause" may be included in the paging message. The information element "paging cause" may be added below the information element called "nonCriticalExtension". In the case of an emergency incoming call, the information element "paging cause" may be set to an emergency.

By verifying a predetermined information element in the paging message in this manner, the mobile station 10 can determine whether the paging message is for an emergency incoming call. In a UMTS (Universal Mobile Telecommunications System), an information element indicating an emergency can be similarly included in the paging message. The present invention is not limited to an LTE system and a UMTS system, but is also applicable to any communication system using an emergency call (emergency outgoing call) and emergency incoming call.

According to an embodiment of the present invention, since the receiver 105 receives information necessary for a carrier search or a cell reselection and broadcast information even during the self mode, the mobile station 10 can shorten the time to originate an emergency call.

In addition, since the receiver 105 can receive a paging message even during the self mode, the control unit 103 can verify a predetermined information element in the paging message and receive an emergency message such as ETWS or CBS and an emergency incoming call such as an incoming call from a police station, a fire department, or the like.

In addition, even during the self mode, the receiver 105 can receive a message for modifying broadcast information and receive the broadcast information again.

In addition, since the control unit 103 defers a location registration during the self mode, transmission of a radio wave from the transmitter 107 can be avoided. When the self mode is released, the location registration is performed and then the mobile station 10 can continue normal operations.

In addition, since the control unit 103 lengthens a DRX period during the self mode, power consumption can be reduced.

The present international application claims priority from Japanese Patent Application No. 2009-089513 filed on April 1, 2009, the entire contents of which are hereby incorporated herein by reference.

### [DESCRIPTION OF NOTATIONS]

- 10: mobile station
- 101: user interface
- 103: control unit
- 105: receiver
- 107: transmitter

## Claims

1. A communication method in a mobile station, comprising the steps of:
placing the mobile station in a self mode; and
allowing the mobile station to receive a radio wave during the self mode.

2. The communication method as claimed in Claim 1, further comprising the steps of:
receiving broadcast information during the self mode;
accepting a request for originating a call during the self mode;
determining whether the call is an emergency call; and
originating the call, when the call is an emergency call.

3. The communication method as claimed in Claim 1, further comprising the steps of:
deferring a location registration during the self mode; and
performing the deferred location registration when the self mode is released.

4. The communication method as claimed in Claim 1, further comprising the steps of:
receiving broadcast information during the self mode;
receiving a paging message during the self mode;
determining whether the received paging message is an emergency paging message; and
processing the paging message, when the received paging message is an emergency paging message.

5. The communication method as claimed in Claim 1, further comprising the step of:
requesting an increase of a DRX period when the mobile station is placed in the self mode.

6. A mobile station, comprising:
a mode setting unit configured to place the mobile station in a self mode; and
a control unit configured to allow the mobile station to receive a radio wave during the self mode.

7. The mobile station as claimed in Claim 6, further comprising:
a receiver configured to receive broadcast information during the self mode; and
a call accepting unit configured to accept a request for originating a call during the self mode;
wherein the control unit determines whether the call accepting unit accepts an emergency call, and allows a transmitter to originate the call in the case of an emergency call.

8. The mobile station as claimed in Claim 6, further comprising:
a receiver configured to receive broadcast information during the self mode and receive a paging message during the self mode;
wherein the control unit determines whether the receiver receives an emergency paging message, and processes the paging message in the case of an emergency paging message.
